(19) **Europäisches Patentamt European Patent Office Office européen des brevets**

(11) **EP 3 949 082 B1**

(12) **FASCICULE DE BREVET EUROPEEN**

(45) Date de publication et mention de la délivrance du brevet:
**23.07.2025 Bulletin 2025/30**

(21) Numéro de dépôt: **20710546.1**

(22) Date de dépôt: **17.03.2020**

(51) Classification Internationale des Brevets (IPC):
**H02K 1/276** *(2022.01)* **H02K 1/24** *(2006.01)*

(52) Classification Coopérative des Brevets (CPC):
**H02K 1/246; H02K 1/2766;** H02K 2213/03

(86) Numéro de dépôt international:
**PCT/EP2020/057284**

(87) Numéro de publication internationale:
**WO 2020/200767 (08.10.2020 Gazette 2020/41)**

(54) **ROTOR DE MACHINE ELECTRIQUE AVEC POLES ASYMETRIQUES ET AIMANTS LATERAUX**

ROTOR FÜR EINE ELEKTRISCHE MASCHINE MIT ASYMMETRISCHEN POLEN UND SEITLICHEN MAGNETEN

ROTOR FOR AN ELECTRICAL MACHINE, HAVING ASYMMETRIC POLES AND LATERAL MAGNETS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2019 FR 1903418**

(43) Date de publication de la demande:
**09.02.2022 Bulletin 2022/06**

(73) Titulaire: **IFP Energies nouvelles 92852 Rueil-Malmaison (FR)**

(72) Inventeurs:
• **ABDELLI, Abdenour**
**92852 RUEIL-MALMAISON CEDEX (FR)**
• **GAUSSENS, Benjamin**
**92852 RUEIL-MALMAISON CEDEX (FR)**
• **NASR, André**
**92852 RUEIL-MALMAISON CEDEX (FR)**
• **CHAREYRON, Baptiste**
**92852 RUEIL-MALMAISON CEDEX (FR)**

(74) Mandataire: **IFP Energies nouvelles Département Propriété Industrielle Rond Point de l'échangeur de Solaize BP3 69360 Solaize (FR)**

(56) Documents cités:
EP-A1- 2 887 503     EP-B1- 3 804 091
WO-A1-2016/198468    DE-A1- 102015 105 138
FR-A1- 2 995 469     US-A- 5 903 080

## Description

### Domaine technique

La présente invention se rapporte à une machine électrique tournante synchro-réluctante (assistée d'aimants permanents), et concerne plus particulièrement un rotor d'une telle machine qui fonctionne avec un bus continu haute tension et qui permet une vitesse de rotation élevée.

Généralement, une telle machine électrique comporte un stator et un rotor disposés coaxialement l'un dans l'autre.

Le rotor est formé d'un corps de rotor avec un empilage de tôles placé sur un arbre de rotor. Ces tôles comprennent des logements pour des aimants permanents et des perforations pour créer des barrières de flux permettant de diriger radialement le flux magnétique des aimants vers le stator et pour favoriser la création d'un couple réluctant.

Ce rotor est généralement logé à l'intérieur d'un stator qui porte des bobinages électriques permettant de générer un champ magnétique permettant d'entraîner en rotation le rotor.

### Technique antérieure

Comme cela est mieux décrit dans la demande de brevet WO2016188764, le rotor d'une telle machine électrique comprend une pluralité d'évidements axiaux qui traversent les tôles de part en part.

Une première série d'évidements axiaux, disposés radialement les uns au-dessus des autres et à distance les uns des autres, forment des logements pour des générateurs de flux magnétiques, ici des aimants permanents sous forme de barreau rectangulaire.

L'autre série d'évidements consiste en des perforations de direction radiale inclinée, qui partent de ces logements pour arriver au voisinage du bord des tôles, au voisinage de l'entrefer.

Les perforations inclinées sont disposées symétriquement par rapport aux logements des aimants de manière à former à chaque fois une figure géométrique sensiblement en forme de V à fond aplati avec le fond plat formé par le logement des aimants et avec les bras inclinés de ce V formés par les perforations. Il se crée ainsi des barrières de flux formées par les perforations. Le flux magnétique provenant des aimants ne peut alors que transiter par les parties pleines entre les perforations. Ces parties pleines sont constituées d'un matériau ferromagnétique.

Cependant, il a été constaté que les harmoniques de force contre-électromotrice et l'ondulation du couple sont importantes dans ce type de machine synchrone à réluctance assistée d'aimants permanents.

Ceci peut générer des à-coups et des vibrations au niveau du rotor en entraînant un inconfort d'utilisation de cette machine.

La demande de brevet, dont le numéro de dépôt est FR 1758621, décrit une machine électrique permettant de réduire ces inconvénients grâce à une structure asymétrique des pôles magnétiques du rotor. Néanmoins, il est souhaitable d'améliorer encore les performances de la machine électrique décrite dans cette demande de brevet, notamment en termes de couple à basse vitesse, et de puissance maximale.

La demande de brevet FR2995469 A1 décrit un rotor de machine électrique tournante.

La demande de brevet DE 102015105138 A1 décrit une machine électrique.

La demande de brevet EP 2887503 A1 décrit un rotor de machine électrique.

La demande de brevet US 593080 A1 décrit un rotor de machine électrique.

### Résumé de l'invention

Afin d'améliorer les performances de la machine électrique tout en limitant les ondulations de couple, les à-coups et les vibrations au niveau du rotor, la présente invention concerne un rotor de machine électrique possédant des pôles magnétiques avec des barrières de flux asymétriques. De plus, des aimants latéraux sont prévus dans au moins une barrière de flux de chaque pôle, permettant notamment d'augmenter le couple à basse vitesse et la puissance maximale en augmentant la masse d'aimants au sein du rotor.

L'invention concerne également une machine électrique, notamment une machine électrique synchro-réluctante, comprenant un tel rotor.

L'invention concerne un rotor pour machine électrique, le rotor comprend :

- un corps de rotor, formé par un empilage de tôles, de préférence placé sur un arbre de rotor,
- N paires de pôles magnétiques, chaque pôle magnétique est composé d'au moins trois aimants positionnés dans des évidements axiaux, et
- trois barrières de flux asymétriques qui composent chaque pôle magnétique dont une barrière de flux externe, une barrière de flux centrale et une barrière de flux interne, chaque barrière de flux comprend deux évidements inclinés positionnés de part et d'autre de chaque évidement axial, les deux évidements inclinés forment entre eux un angle d'ouverture qui correspond à l'angle entre deux droites passant chacune par le centre C du rotor et par un point milieu positionné au niveau d'une face externe des évidements respectifs de chaque barrière de flux.
Le rotor comprend

- des aimants dans les évidements inclinés d'au moins une barrière de flux de chaque pôle magnétique,
- N pôles magnétiques primaires composés chacun d'une barrière de flux interne comprenant un angle d'ouverture ($\theta$1), d'une barrière de flux centrale comprenant un angle d'ouverture ($\theta$2) et une barrière de flux externe comprenant un angle d'ouverture ($\theta$3), de telle sorte que les angles d'ouverture ($\theta$1, $\theta$2, $\theta$3) vérifient au moins deux des trois équations suivantes : $\Theta$1 = (0,946 +/-0,014) x P, $\Theta$2 = (0,711 +/- 0,014) x P, $\Theta$3 = (0,508 +/- 0,014) x P,
- N pôles magnétiques secondaires composés chacun d'une barrière de flux interne comprenant un angle d'ouverture ($\theta$1), d'une barrière de flux centrale comprenant un angle d'ouverture ($\theta$2) et une barrière de flux externe comprenant un angle d'ouverture ($\theta$3), de telle sorte que les angles d'ouverture ($\theta$1, $\theta$2, $\theta$3) vérifient au moins deux des trois équations suivantes : $\Theta$1 = (0,776 +/-0,014)x P, $\Theta$2 = (0,564 +/- 0,014) x P, $\Theta$3 = (0,348 +/- 0,014) x P, chaque pôle secondaire étant alterné avec un pôle primaire et avec

- P étant le pas polaire dudit rotor défini en degrés par $P = \frac{360}{2 \times N}$ .

Avantageusement, ledit nombre N de paires de pôles magnétiques est compris entre 2 et 9, de préférence entre 3 et 6, et vaut de manière préférée 5.

De préférence, lesdites barrières de flux ont sensiblement une forme de V à fond aplati.

Selon un mode de réalisation, ledit rotor comprend des aimants dans lesdits évidements inclinés desdites barrières de flux interne et centrale.

De manière avantageuse, les dimensions desdits aimants dans lesdits évidements inclinés desdites barrières de flux centrales sont identiques aux dimensions desdits aimants dans lesdits évidements axiaux externes.

Selon un aspect de l'invention, les dimensions desdits aimants dans lesdits évidements inclinés desdites barrières de flux internes sont identiques aux dimensions desdits aimants dans lesdits évidements axiaux centraux.

Conformément à une mise en œuvre, lesdits angles d'ouverture ($\theta$1, $\theta$2, $\theta$3) desdits pôles magnétiques primaires vérifient au moins deux des trois équations suivantes : $\Theta$1 = (0,946 +/- 0,008) x P, $\Theta$2 = (0,711 +/- 0,008) x P, $\Theta$3 = (0,508 +/- 0,008) x P.

Selon un aspect lesdits angles d'ouverture ($\theta$1, $\theta$2, $\theta$3) desdits pôles magnétiques secondaires vérifient au moins deux des trois équations suivantes : $\Theta$1 = (0,776 +/-0,008) x P, $\Theta$2 = (0,564 +/- 0,008) x P, $\Theta$3 = (0,348 +/- 0,008) x P.

Selon un mode de réalisation, lesdits angles d'ouverture ($\theta$1, $\theta$2, $\theta$3) desdits pôles magnétiques primaires vérifient lesdites trois équations.

Selon un aspect de l'invention, lesdits angles d'ouverture ($\theta$1, $\theta$2, $\theta$3) desdits pôles magnétiques secondaires vérifient lesdites trois équations.

De plus, l'invention concerne une machine électrique comprenant un stator et un rotor selon l'une des caractéristiques précédentes, ledit rotor étant logé à l'intérieur dudit stator.

Conformément à une mise en œuvre de l'invention, ledit stator comprend une multiplicité d'encoches radiales disposées circonférentiellement le long dudit stator, de préférence le nombre d'encoches vaut six fois le nombre N de paires de pôles dudit rotor.

Avantageusement, lesdites encoches s'étendent axialement le long du stator.

Selon un aspect, ladite machine électrique est du type machine électrique synchro-réluctante.

D'autres caractéristiques et avantages du dispositif selon l'invention, apparaîtront à la lecture de la description ci-après d'exemples non limitatifs de réalisations, en se référant aux figures annexées et décrites ci-après.

**Liste des figures**

La figure 1 illustre un rotor conforme à un mode de réalisation de l'invention, le rotor comportant cinq paires de pôles.

La figure 2 illustre une machine électrique possédant cinq paires de pôles selon un mode de réalisation de l'invention.

La figure 3 est une courbe comparative du couple en fonction de la vitesse de rotation du rotor pour un exemple d'une machine électrique selon l'invention et d'une machine électrique selon un exemple non conforme à l'invention.

La figure 4 est une courbe comparative de la puissance en fonction de la vitesse de rotation du rotor pour un exemple d'une machine électrique selon l'invention et d'une machine électrique selon un exemple non conforme à l'invention.

La figure 5 est une courbe comparative du couple en fonction du courant pour un exemple d'une machine électrique selon l'invention et d'une machine électrique selon un exemple non conforme à l'invention.

La figure 6 est une courbe comparative de la puissance en fonction de la vitesse de rotation du rotor pour un exemple d'une machine électrique selon l'invention et d'une machine électrique selon un exemple non conforme à l'invention avec le même courant initial.

## Description des modes de réalisation

La présente invention concerne un rotor pour une machine électrique, notamment une machine électrique du type synchro-réluctante. En outre, la présente invention concerne une machine électrique comprenant un rotor selon l'invention et un stator, le rotor étant disposé au sein du stator coaxialement à celui-ci.

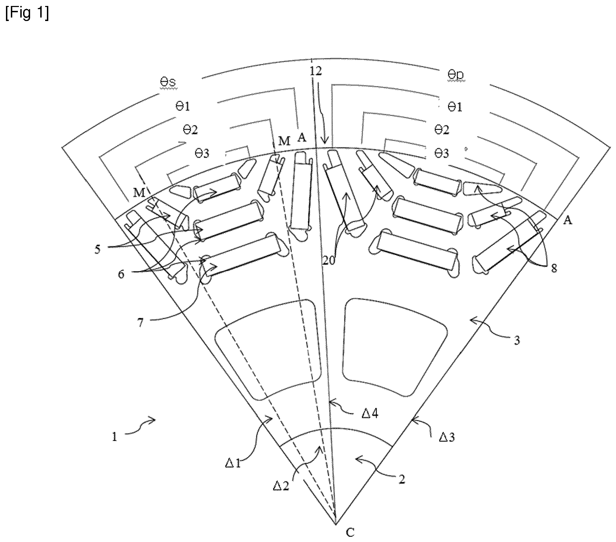

Comme illustré sur la figure 1 (de manière non limitative, la figure 1 étant une vue partielle du rotor correspondant à une paire de pôles magnétiques), un rotor 1 comporte de manière connue en soi, un arbre 2, de préférence magnétique, sur lequel est monté un empilage de tôles 3. Dans le cadre de l'invention, ces tôles 3 sont ferromagnétiques planes, identiques, laminées et de forme circulaire et sont assemblées les unes aux autres par tous moyens connus. Les tôles 3 peuvent comprendre un alésage central traversé par l'arbre de rotor 2 et une pluralité d'évidements axiaux 5 qui traversent les tôles 3 de part en part.

Une première série d'évidements axiaux 6, disposés radialement les uns au-dessus des autres et à distance les uns des autres, forment des logements pour des générateurs de flux magnétiques, ici des aimants permanents 7 sous forme de barreau. Les évidements axiaux 6 forment sensiblement des trapèzes. Cependant les évidements axiaux 6 peuvent prendre d'autres formes, notamment des formes rectangulaires, carrées, etc.

Une deuxième série d'évidements consiste en des perforations de direction inclinée 8 par rapport à la direction radiale, qui partent des évidements axiaux 6 pour arriver au voisinage du bord des tôles 3, c'est-à-dire au niveau d'un entrefer de la machine électrique.

Les perforations inclinées 8 sont disposées symétriquement par rapport aux évidements 6 des aimants 7 de manière à former à chaque fois une figure géométrique sensiblement en forme de V à fond aplati, avec le fond plat formé par le logement 6 des aimants 7 et avec les bras inclinés de ce V formés par les perforations inclinées 8. Les perforations inclinées 8 forment des barrières de flux. Le flux magnétique provenant des aimants 7 ne peut alors que transiter par les parties pleines des tôles 3 entre les évidements. Ces parties pleines sont constituées d'un matériau ferromagnétique.

Selon l'invention, le rotor comprend N paires de pôles magnétiques (ou 2xN pôles magnétiques), un pôle magnétique étant formé des trois évidements 6 pour les aimants sur une même direction radiale, et les barrières de flux (9, 10, 11) associées. Avantageusement, N peut être compris entre 2 et 9, et de préférence N est compris entre 3 et 6, et vaut de manière préférée 5.

A partir du nombre N de paires de pôles, on définit un pas polaire P. Exprimé en degré, le pas polaire peut être déterminé par une formule du type :

$$P = \frac{360}{2 \times N}$$

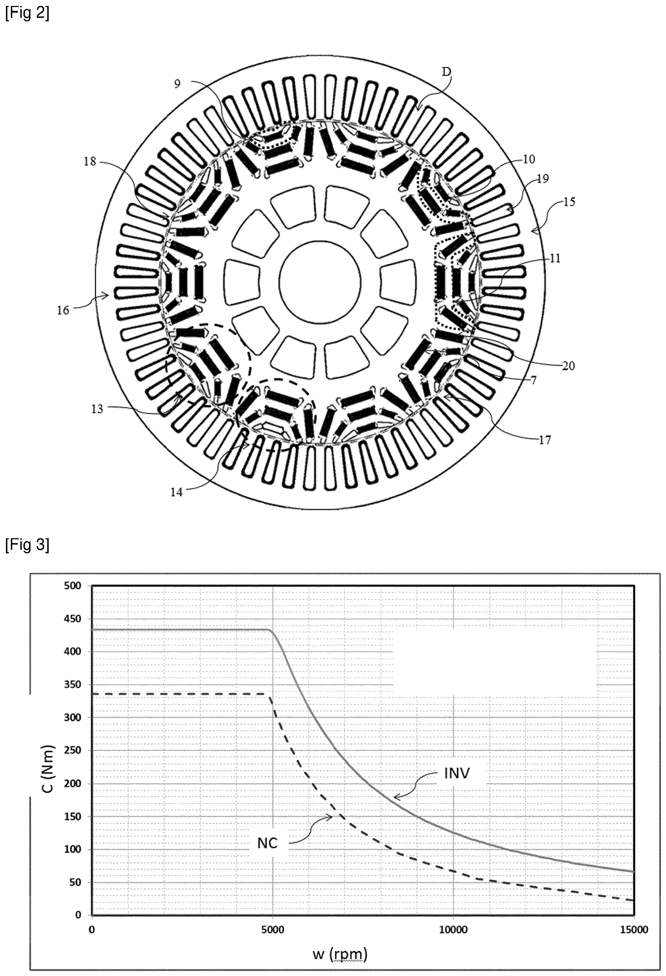

Pour l'exemple illustré des figures 1 et 2, le rotor 1 comprend dix pôles magnétiques (N = 5), le pas polaire P vaut donc 36°. Chaque pôle magnétique est composé de trois aimants permanents 7 positionnés dans les trois évidements axiaux 6 prévus pour loger les aimants permanents 7. Le rotor 1 est également composé de trois barrières de flux, dont une barrière de flux externe 9 (associée à l'évidement 6 externe, c'est-à-dire le plus proche de la périphérie du rotor 1), une barrière de flux centrale 10 (associée à l'évidement 6 central) et une barrière de flux interne 11 (associée à l'évidement 6 interne, c'est-à-dire le plus proche du centre du rotor 1).

Tel que cela est visible sur les figures 1 et 2, chaque barrière de flux (9, 10, 11) comprend deux perforations inclinées qui sont disposées symétriquement par rapport aux logements des aimants 7 pour chaque pôle magnétique. Ainsi, il se forme à chaque fois une figure géométrique sensiblement en forme de V à fond aplati avec le fond plat formé par le logement 7 et avec les bras inclinés de ce V formés par les perforations inclinées. Pour chaque barrière de flux (9, 10, 11) de chaque pôle magnétique va correspondre un angle d'ouverture (θ1, θ2, θ3) qui va qualifier l'ouverture de la forme en V. Ces angles d'ouverture correspondent à l'angle entre deux droites (Δ1, Δ2) passant chacune par le centre C du rotor 1 et par un point milieu M positionné au niveau d'une face externe 12 (avantageusement sur le rayon d'entrefer situé à mi-distance entre le rotor et le stator) des perforations de direction radiale inclinée 8 de chaque barrière de flux. Cette face externe 12 se situe à la périphérie du rotor 1, au niveau d'un entrefer mécanique de la machine électrique comme cela sera vu par dans suite de la description.

Dans le cadre de l'invention, le rotor 1 comprend deux architectures distinctes de pôles magnétiques. A cet effet, il comprend N pôles magnétiques primaires 13 et N pôles magnétiques secondaires 14. Le rotor comporte une alternance de pôles magnétiques primaires 13 et de pôles magnétiques secondaires 14. Pour les exemples des figures 1 et 2, le rotor 1 comporte cinq pôles magnétiques primaires 13 et cinq pôles magnétiques secondaires 14.

Selon l'invention, les N pôles magnétiques primaires 13 sont composés chacun d'une barrière de flux interne 11 qui comprend un angle d'ouverture $\theta1$, d'une barrière de flux centrale 10 comprenant un angle d'ouverture $\theta2$ et une barrière de flux externe 9 comprenant un angle d'ouverture $\theta3$. Les angles $\theta1$, $\theta2$ et $\theta3$ des pôles magnétiques primaires vérifient au moins deux des trois équations suivantes : $\Theta1 = (0{,}946 +/-0{,}014) \times P$, $\Theta2 = (0{,}711 +/- 0{,}014) \times P$, $\Theta3 = (0{,}508 +/- 0{,}014) \times P$, Les N pôles magnétiques secondaires 14 sont composés quant à eux chacun d'une barrière de flux interne 11 comprenant un angle d'ouverture $\theta1$, d'une barrière de flux centrale 10 comprenant un angle d'ouverture $\theta2$ et une barrière de flux externe 9 comprenant un angle d'ouverture $\theta3$. Les angles $\theta1$, $\theta2$ et $\theta3$ des pôles magnétiques primaires vérifient au moins deux des trois équations suivantes : $\Theta1 = (0{,}776 +/- 0{,}014) \times P$, $\Theta2 = (0{,}564 +/- 0{,}014) \times P$, $\Theta3 = (0{,}348 +/- 0{,}014) \times P$.

Dans la présente demande X +/- Y (avec X et Y des nombres positifs), signifie un intervalle centré sur la valeur X, l'intervalle étant compris entre les valeurs X-Y et X+Y.

On peut noter que si deux des trois angles d'un pôle sont contraints par les équations, le troisième est également contraint par construction du rotor : en particulier par le pas polaire (angle d'ouverture maximale), par les autres angles d'ouverture (notamment l'angle d'ouverture de la barrière interne est supérieur à l'angle d'ouverture centrale, lui-même supérieur à l'angle d'ouverture de la barrière externe), par la symétrie des barrières de flux au sein d'un pôle. Ainsi, contraindre deux angles sur trois par les équations est suffisant pour obtenir les effets désirés en termes de réduction des ondulations de couple et des harmoniques.

Un aspect majeur de l'invention est que le rotor 1 comprend une alternance entre les pôles magnétiques primaires 13 et les pôles magnétiques secondaires 14. De cette manière, l'ondulation du couple, les harmoniques de force contre-électromotrice et le bruit acoustique sont fortement réduits par rapport au machine électrique de l'art antérieur, tout en maximisant le couple.

En effet, il se crée ainsi des barrières de flux asymétriques entre deux pôles consécutifs. Le flux magnétique provenant des aimants ne peut alors que transiter par les parties pleines entre les perforations et permet de réduire l'ondulation du couple, les harmoniques de force contre-électromotrice et le bruit acoustique.

Selon une option de réalisation de l'invention, les angles d'ouverture $\theta1$, $\theta2$ et $\theta3$ desdits pôles magnétiques primaires 13 vérifient au moins deux des trois équations suivantes : $\Theta1 = (0{,}946 +/- 0{,}008) \times P$, $\Theta2 = (0{,}711 +/- 0{,}008) \times P$, $\Theta3 = (0{,}508 +/- 0{,}008) \times P$. Cette option de réalisation permet d'optimiser la réduction des ondulations de couple et la réduction des harmoniques.

Selon une autre option de réalisation de l'invention (pouvant être combinée à l'option précédente), les angles d'ouverture $\theta1$, $\theta2$ et $\theta3$ des pôles magnétiques secondaires 14 vérifient au moins deux des trois équations suivantes : $\Theta1 = (0{,}776 +/-0{,}008) \times P$, $\Theta2 = (0{,}564 +/- 0{,}008) \times P$, $\Theta3 = (0{,}348 +/- 0{,}008) \times P$. Cette option de réalisation permet d'optimiser la réduction des ondulations de couple et la réduction des harmoniques.

De préférence, les angles d'ouverture $\theta1$, $\theta2$ et $\theta3$ des pôles magnétiques primaires 13 vérifient les trois équations énoncées ci-dessous (c'est-à-dire soit les équations selon l'invention, soit les équations selon une option de réalisation). Ce mode de réalisation permet d'optimiser la réduction des ondulations de couple et la réduction des harmoniques

De manière préférée, les angles d'ouverture $\theta1$, $\theta2$ et $\theta3$ des pôles magnétiques secondaires 14 vérifient les trois équations (c'est-à-dire soit les équations selon l'invention, soit les équations selon une option de réalisation). Ce mode de réalisation permet d'optimiser la réduction des ondulations de couple et la réduction des harmoniques.

Ainsi, conformément à une mise en œuvre préférée, les N pôles magnétiques primaires 13 sont composés chacun d'une barrière de flux interne 11 qui comprend un angle d'ouverture $\theta1$ sensiblement égal à $(0.946+/-0.008) \times P$, d'une barrière de flux centrale 10 comprenant un angle d'ouverture $\theta2$ sensiblement égal à $(0.711+/-0.008) \times P$ et une barrière de flux externe 9 comprenant un angle d'ouverture $\theta3$ sensiblement égal à $(0.508+/- 0.008) \times P$. Les N pôles magnétiques secondaires 14 sont composés quant à eux chacun d'une barrière de flux interne 11 comprenant un angle d'ouverture $\theta1$ sensiblement égal à $(0.776+/-0.008) \times P$, d'une barrière de flux centrale 10 comprenant un angle d'ouverture $\theta2$ sensiblement égal à $(0.564+/-0.008) \times P$ et une barrière de flux externe 9 comprenant un angle d'ouverture $\theta3$ sensiblement égal à $(0.348+/-0.008) \times P$. Cette mise en œuvre préférée permet une solution optimale en termes de réduction des ondulations de couple et de réduction des harmoniques.

Pour le mode de réalisation des figures 1 et 2 pour lequel N=5 donc P=36°, les cinq pôles magnétiques primaires 13 sont composés chacun d'une barrière de flux interne 11 qui comprend un angle d'ouverture $\theta1$ sensiblement égal à 34.05°, d'une barrière de flu x centrale 10 comprenant un angle d'ouverture $\theta2$ sensiblement égal à 25.58° et une barrière de flux externe 9 comprenant un angle d'ouverture $\theta3$ sensiblement égal à 18.29°. Les quatre pôles magnétiques secondaires 14 sont composés quant à eux chacun d'une barrière de flux interne 11 comprenant un angle d'ouverture $\theta1$ sensiblement égal à 27.93°, d'une barrière de flux centrale 10 comprenant un angle d'ouverture $\theta2$ sensiblement égal à 20.32° et une barrière de flux externe 9 comprenant un angle d'ouverture $\theta3$ sensiblement égal à 12.51 °.

De plus, pour le mode de réalisation des figures 1 et 2 pour lequel N=5, l'angle d'ouverture du pôle magnétique primaire θp vaut 39 °, et l'angle d'ouverture du pôle magnétique secondaire θs vaut 33 °. L'angle d'ouverture d'un pôle magnétiq ue étant défini l'angle entre deux droites (Δ3, Δ4) passant chacune par le centre C du rotor 1 et par un point milieu A positionné au niveau d'une face externe 12 entre chaque pôle primaire 13 et chaque pôle secondaire 14. Pour ce mode de réalisation, les six angles d'ouverture (θ1, θ2 et θ3 des pôles magnétiques primaires et secondaire) appartiennent à la mise en œuvre préférée de l'invention.

De manière générale, selon un aspect de l'invention, l'angle d'ouverture du pôle magnétique primaire θp peut être sensiblement égal à 1.083xP +/-0.5°, et l'angle d'ouverture du pôle magnétique secondaire θs peut être sensiblement égal à 0.917xP +/-0.5°.

La réduction de l'ondulation de couple, des harmoniques de force contre-électromotrice et de bruit acoustique est en outre obtenue car la définition des angles des pôles magnétiques primaire et secondaire selon l'invention par rapport à une conception symétrique de la machine électrique. Cette conception asymétrique peut par exemple (dans le cas d'une machine électrique à huit pôles) sensiblement correspondre à la conception décrite dans la demande de brevet portant le numéro de dépôt FR 17/58.621.

De plus, selon l'invention, des aimants 20 sont prévus dans les évidements inclinés 8 d'au moins une barrière de flux 9,10 ou 11 de chaque pôle magnétique. En d'autres termes, au moins une barrière de flux 9, 10 ou 11 de chaque pôle magnétique comporte des aimants latéraux 20. Ainsi, la masse d'aimants au sein du rotor est augmentée, ce qui permet d'améliorer les performances de la machine électrique, en particulier le couple à basse vitesse et la puissance maximale.

Selon un mode de réalisation de l'invention, le rotor peut comprendre des aimants latéraux 20 uniquement dans les évidements inclinés 8 des barrières de flux internes 11 : aucun aimant latéral n'est prévu dans les évidements inclinés 8 des barrières de flux centrales 10 et externes 9.

De préférence, le rotor peut comprendre des aimants latéraux 20 uniquement dans les évidements inclinés 8 des barrières de flux internes 11 et centrales 10 : aucun aimant latéral n'est prévu dans les évidements inclinés des barrières de flux externe. Cette configuration permet une optimisation de la masse des aimants au sein du rotor et des performances de la machine électrique.

Pour ces deux modes de réalisation, les aimants latéraux 20 disposés dans les évidements 8 des barrières de flux internes 11 peuvent avoir des dimensions identiques aux aimants axiaux 7 disposés dans les évidements axiaux 6 centraux (correspondant aux barrières de flux centrales 10). Ainsi, on limite le nombre d'aimants différents utilisés, ce qui permet de réduire les coûts du rotor.

Pour le mode de réalisation préféré, les aimants latéraux 20 disposés dans les évidements 8 des barrières de flux centrales 10 peuvent avoir des dimensions différentes aux aimants axiaux 7 disposés dans des évidements axiaux 6 externes (correspondant aux barrières de flux externes 9). Ainsi, on maximise le couple à basse vitesse.

L'exemple non limitatif des figures 1 et 2 correspond au mode de réalisation préféré de l'invention, pour lequel des aimants latéraux 20 sont disposés dans les évidements 8 des barrières de flux internes 11 et centrales 10, et pour lequel les dimensions des aimants latéraux 20 disposés dans les évidements 8 des barrières de flux internes 11 ont des dimensions identiques aux aimants axiaux 7 disposés des évidements axiaux 6 centraux, et pour lequel les aimants latéraux 20 disposés dans les évidements 8 des barrières de flux centrales 10 ont des dimensions différentes aux aimants axiaux 7 disposés dans des évidements axiaux 6 externes.

Selon une option de réalisation de l'invention, les aimants sont des aimants faibles coûts comme des ferrites, AlNiCo, etc. Ainsi, le coût du rotor reste limité malgré le nombre d'aimants permanents disposés au sein du rotor.

Ainsi, le rotor selon l'invention est adapté à machine électrique synchro-réluctante qui fonctionne avec un bus continu haute tension qui permet une vitesse de rotation élevée (supérieure à 15 000 tr/min, par exemple à 18 000 tr/min).

Le tableau 1 donne, de manière non limitative, les valeurs des angles θ1, θ2 et θ3 pour différentes valeurs de N selon l'invention.

[Table 1]

| N | | 3 | 4 | 5 | 6 |
|---|---|---|---|---|---|
| P | | 60° | 45° | 36° | 30° |
| Pole magnétique secondaire 14 | θ3 | 20.88°+/- 0.83° | 15.66°+/- 0.63° | 12.53°+/- 0.50° | 10.44°+/- 0.42° |
| | θ2 | 33.84°+/- 0.83° | 25.38°+/- 0.63° | 20.30°+/- 0.50° | 16.92°+/- 0.42° |
| | θ1 | 46.56°+/- 0.83° | 34.92°+/- 0.63° | 27.94°+/- 0.50° | 23.28°+/- 0.42° |
| Pôle magnétique primaire 13 | θ3 | 30.48°+/- 0.83° | 22.86°+/- 0.63° | 18.29°+/- 0.50° | 15.24°+/- 0.42° |
| | θ2 | 42.66°+/- 0.83° | 32.00°+/- 0.63° | 25.60°+/- 0.50° | 21.33°+/- 0.42° |
| | θ1 | 56.76°+/- 0.83° | 42.57°+/- 0.63° | 34.06°+/- 0.50° | 28.38°+/- 0.42° |

Le tableau 2 donne, de manière non limitative, les valeurs des angles θ1, θ2 et θ3 pour différentes valeurs de N selon la mise en œuvre préférée de l'invention.

[Table 2]

| N | | 3 | 4 | 5 | 6 |
|---|---|---|---|---|---|
| P | | 60° | 45° | 36° | 30° |
| Pole magnétique secondaire 14 | θ3 | 20.88°+/-0.48° | 15.66°+/-0.36° | 12.53°+/-0.29° | 10.44°+/-0.24° |
| | θ2 | 33.84°+/-0.48° | 25.38°+/-0.36° | 20.30°+/-0.29° | 16.92°+/-0.24° |
| | θ1 | 46.56°+/-0.48° | 34.92°+/-0.36° | 27.94°+/-0.29° | 23.28°+/-0.24° |
| Pôle magnétique primaire 13 | θ3 | 30.48°+/-0.48° | 22.86°+/-0.36° | 18.29°+/-0.29° | 15.24°+/-0.24° |
| | θ2 | 42.66°+/-0.48° | 32.00°+/-0.36° | 25.60°+/-0.29° | 21.33°+/-0.24° |
| | θ1 | 56.76°+/-0.48° | 42.57°+/-0.36° | 34.06°+/-0.29° | 28.38°+/-0.24° |

Selon une mise en œuvre de l'invention, le rotor 1 peut avoir une longueur de 200 mm, et les tôles 3 constitutives du rotor 1 peuvent être laminées à 0.35 mm. Toutefois ces valeurs ne sont nullement limitatives et on peut avoir tous les spectres de distances qui satisfassent aux valeurs d'angles énoncées ci-dessus.

Comme visible sur la figure 2, qui illustre, schématiquement et de manière non limitative, une machine électrique tournante conforme à un mode de réalisation de l'invention (ici une machine synchrone à réluctance variable assistée d'aimant permanent), la machine électrique comprend également un stator 15 imbriqué dans le rotor 1 de manière coaxiale.

Le stator 15 comprend une bague annulaire 16 avec une paroi interne 17 dont le diamètre intérieur est prévu pour recevoir le rotor 1 avec un espace nécessaire pour réaliser un entrefer 18. Cette bague comprend une multiplicité d'encoches (perçages), ici de section oblongue, qui forment des encoches 19 pour les bobinages d'induit.

Plus précisément, ces perçages s'étendent axialement tout au long du stator 15 en étant disposés radialement sur la bague tout en étant placés circonférentiellement à distance les uns des autres d'une distance D. Le nombre d'encoches est prédéterminé en fonction des caractéristiques de la machine électrique, et en fonction du nombre N de paires de pôles. De préférence, le nombre d'encoches du stator peut correspondre à 4 fois le nombre N de paires de pôles du rotor multiplié par le nombre de phases du stator. Pour l'exemple illustré de la figure 2, pour lequel N=5 et pour lequel le stator comporte trois phases, il y a 60 encoches.

Selon un exemple de réalisation, le stator peut avoir un diamètre extérieur compris entre 100 et 300 mm, et de préférence environ 200 mm et un diamètre intérieur compris entre 50 et 200 mm, de préférence environ 157.4 mm. La longueur de l'entrefer 18 de la machine électrique peut être comprise entre 0.4 et 0.8 mm, de préférence entre 0.5 et 0.6 mm.

La machine électrique synchro-réluctante selon l'invention est particulièrement adaptée pour une application d'un groupe motopropulseur électrique.

Toutefois, la machine électrique selon l'invention peut être utilisée dans tous types d'applications stationnaires ou mobiles.

Comme il va de soi, l'invention ne se limite pas aux seules formes de réalisation des évidements, décrits ci-dessus à titre d'exemple, elle embrasse au contraire toutes les variantes de réalisation.

**Exemples**

Les caractéristiques et avantages du procédé selon l'invention apparaîtront plus clairement à la lecture de l'exemple d'application ci-après.

Dans cet exemple, on compare une machine électrique synchro-réluctante selon l'invention, selon le mode de réalisation de la figure 2, avec N=5 et avec des aimants latéraux dans les évidements des barrières de flux internes et centrales dans chaque pôle magnétique, à une machine électrique non conforme à l'invention sans aimants latéraux. La machine électrique non conforme à l'invention possède les mêmes caractéristiques que la machine électrique selon l'invention, en particulier le même nombre de paires de pôles, les mêmes dimensions et les mêmes angles d'ouvertures des barrières de flux. La seule différence entre les deux machines électriques est la présence d'aimants latéraux dans la machine électrique selon l'invention.

Pour cet exemple, on compare dans un premier temps le volume d'aimants pour ces deux conceptions de machines électriques dans le tableau 2.

[Table 2]

|  | Exemple non conforme à l'invention | Exemple selon l'invention |
|---|---|---|
| Volume des aimants (cm$^3$) | 106.31 | 214.15 |
| Ecart (%) | 0 | 101 |

Ainsi, le rotor selon l'invention permet de doubler le volume, donc la masse d'aimants au sein de la machine électrique, ce qui permet d'augmenter les performances de la machine électrique tel que cela est illustré aux figures 3 à 6.

La figure 3 est une courbe du couple C en Nm en fonction de la vitesse de rotation w en rpm (ou tr/min) du rotor, pour la machine électrique selon l'invention INV et pour la machine électrique non conforme à l'invention NC avec un même courant maximal I en A dans la machine électrique.

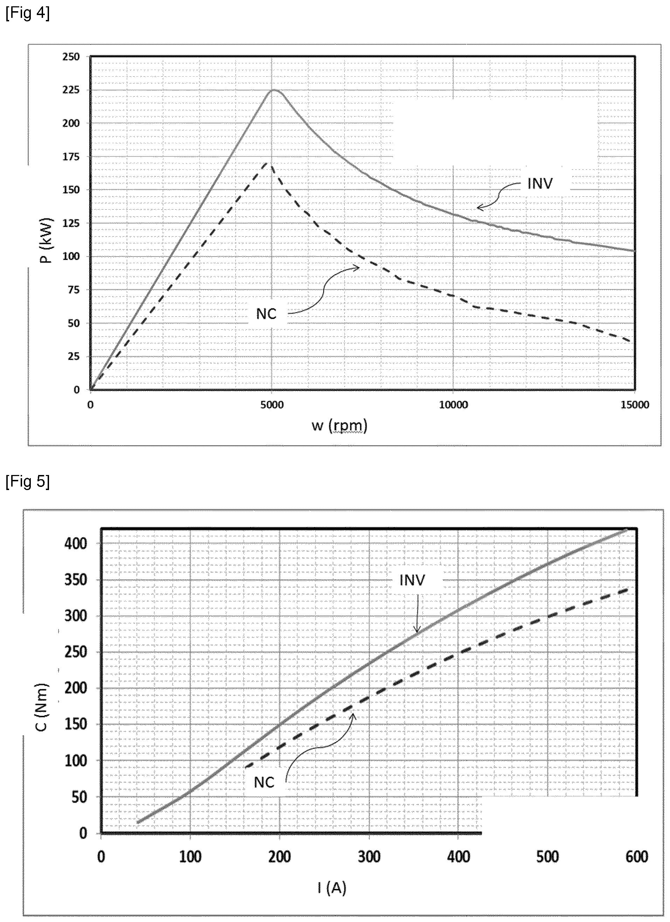

La figure 4 est une courbe de la puissance P en kW en fonction de la vitesse de rotation w en rpm (ou tr/min) du rotor, pour la machine électrique selon l'invention INV et pour la machine électrique non conforme à l'invention NC avec un même courant maximal I en A dans la machine électrique.

On remarque sur les figures 3 et 4, que la machine électrique selon l'invention INV permet d'augmenter le couple à basse vitesse de 25 % et d'augmenter la puissance maximale de 32 % par rapport à la machine électrique non conforme NC à l'invention. De plus, on constate que le gain à haute vitesse est encore plus important et permet de doubler le couple et la puissance.

La figure 5 est une courbe du couple C en Nm en fonction du courant I en A injecté dans la machine électrique, pour la machine électrique selon l'invention INV et pour la machine électrique non conforme à l'invention NC.

On constate que la machine électrique selon l'invention INV permet, à couple constant, d'avoir un besoin en courant plus faible en ajoutant des aimants latéraux que la machine électrique non conforme à l'invention NC. De cette manière, pour un même couple et dans le cadre de l'invention, le courant maximal est diminué de 25 % et par conséquent, les pertes Joule maximales sont diminués de 50%. Il est alors possible de prévoir un système de refroidissement plus simple et moins couteux pour un même niveau de performances.

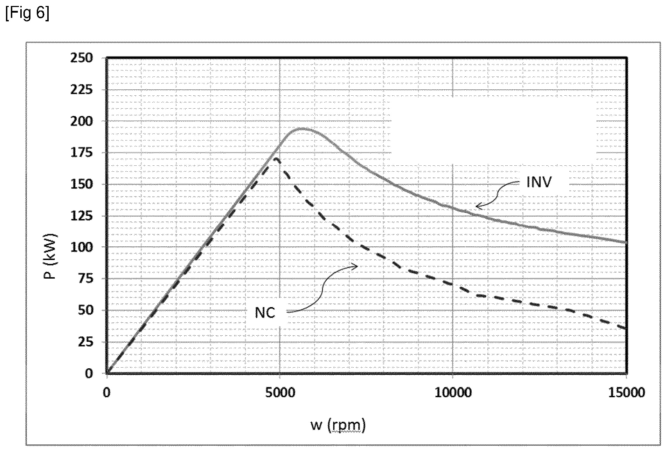

La figure 6 est une courbe de la puissance P en kW en fonction de la vitesse de rotation w en rpm (ou tr/min) du rotor, pour la machine électrique selon l'invention INV et pour la machine électrique non conforme à l'invention NC avec un courant I plus faible réglé pour l'invention INV réglé pour avoir un même couple basse vitesse.

On constate sur la figure 6, qu'on peut obtenir une machine électrique avec un même couple initial, mais avec plus de puissance à haute vitesse tout en minimisant les pertes Joule.

## Revendications

**1.** Rotor (1) pour machine électrique, le rotor (1) comprend :

- un corps de rotor, formé par un empilage de tôles (3), de préférence placé sur un arbre de rotor (2),
- N paires de pôles magnétiques, chaque pôle magnétique est composé d'au moins trois aimants (7) positionnés dans des évidements axiaux (6), et
- trois barrières de flux asymétriques qui composent chaque pôle magnétique dont une barrière de flux externe (9), une barrière de flux centrale (10) et une barrière de flux interne (11), chaque barrière de flux (9, 10, 11) comprend deux évidements inclinés (8) positionnés de part et d'autre de chaque évidement axial (6), les deux évidements inclinés (8) forment entre eux un angle d'ouverture ($\theta$1, $\theta$2, $\theta$3) qui correspond à l'angle entre deux droites ($\Delta$1, $\Delta$2) passant chacune par le centre C du rotor (1) et par un point milieu (M) positionné au niveau d'une face externe (12) des évidements (8) respectifs de chaque barrière de flux (9, 10, 11);
- des aimants (20) dans les évidements inclinés (8) d'au moins une barrière de flux (9, 10, 11) de chaque pôle magnétique,
- N pôles magnétiques primaires (13) composés chacun d'une barrière de flux interne (11) comprenant un angle d'ouverture ($\theta$1), d'une barrière de flux centrale (10) comprenant un angle d'ouverture ($\theta$2) et une barrière de flux externe (9) comprenant un angle d'ouverture ($\theta$3), de telle sorte que les angles d'ouverture ($\theta$1, $\theta$2, $\theta$3) vérifient au moins deux des trois équations suivantes : $\Theta$1 = (0,946 +/- 0,014) x P, $\Theta$2 = (0,711 +/- 0,014) x P, $\Theta$3 = (0,508 +/- 0,014) x P,
- N pôles magnétiques secondaires (14) composés chacun d'une barrière de flux interne (11) comprenant un angle d'ouverture ($\theta$1), d'une barrière de flux centrale (10) comprenant un angle d'ouverture ($\theta$2) et une barrière de flux externe (9) comprenant un angle d'ouverture ($\theta$3), de telle sorte que les angles d'ouverture ($\theta$1, $\theta$2, $\theta$3) vérifient au moins deux des trois équations suivantes : $\Theta$1 = (0,776 +/- 0,014) x P, $\Theta$2 = (0,564 +/- 0,014) x P, $\Theta$3 = (0,348 +/- 0,014) x P, chaque pôle secondaire (14) étant alterné avec un pôle primaire (13) et avec

8

- P étant le pas polaire dudit rotor (1) défini en degrés par $P = \frac{360}{2 \times N}$.

2. Rotor (1) selon la revendication 1, dans lequel ledit nombre N de paires de pôles magnétiques est compris entre 2 et 9, de préférence entre 3 et 6, et vaut de manière préférée 5.

3. Rotor (1) selon l'une des revendications précédentes, dans lequel lesdites barrières de flux ont sensiblement une forme de V à fond aplati.

4. Rotor (1) selon l'une des revendications précédentes, dans lequel ledit rotor comprend des aimants (20) dans lesdits évidements inclinés (8) desdites barrières de flux interne (11) et centrale (10).

5. Rotor (1) selon la revendication 4, dans lequel les dimensions desdits aimants (20) dans lesdits évidements inclinés (8) desdites barrières de flux centrales (10) sont identiques aux dimensions desdits aimants (7) dans lesdits évidements axiaux (6) externes.

6. Rotor (1) selon l'une des revendications 4 ou 5, dans lequel les dimensions desdits aimants (20) dans lesdits évidements inclinés (8) desdites barrières de flux internes (11) sont identiques aux dimensions desdits aimants (7) dans lesdits évidements axiaux (6) centraux.

7. Rotor (1) selon l'une des revendications précédentes, dans lequel lesdits angles d'ouverture ($\theta$1, $\theta$2, $\theta$3) desdits pôles magnétiques primaires (13) vérifient au moins deux des trois équations suivantes : $\Theta$1 = (0,946 +/- 0,008) x P, $\Theta$2 = (0,711 +/-0,008) x P, $\Theta$3 = (0,508 +/- 0,008) x P.

8. Rotor (1) selon l'une des revendications précédentes, dans lequel lesdits angles d'ouverture ($\theta$1, $\theta$2, $\theta$3) desdits pôles magnétiques secondaires (14) vérifient au moins deux des trois équations suivantes : $\Theta$1 = (0,776 +/- 0,008) x P, $\Theta$2 = (0,564 +/-0,008) x P, $\Theta$3 = (0,348 +/- 0,008) x P.

9. Rotor (1) selon l'une des revendications précédentes, dans lequel lesdits angles d'ouverture ($\theta$1, $\theta$2, $\theta$3) desdits pôles magnétiques primaires (13) vérifient lesdites trois équations.

10. Rotor (1) selon l'une des revendications précédentes, dans lequel lesdits angles d'ouverture ($\theta$1, $\theta$2, $\theta$3) desdits pôles magnétiques secondaires (14) vérifient lesdites trois équations.

11. Machine électrique **caractérisée en ce qu'**elle comprend un stator (15) et un rotor (1) selon l'une des revendications précédentes, ledit rotor (1) étant logé à l'intérieur dudit stator (15).

12. Machine électrique selon la revendication 11 **caractérisée en ce que** ledit stator (15) comprend une multiplicité d'encoches (19) radiales disposées circonférentiellement le long dudit stator (15), de préférence le nombre d'encoches (19) vaut six fois le nombre N de paires de pôles dudit rotor.

13. Machine électrique selon la revendication 12, **caractérisée en ce que** lesdites encoches (19) s'étendent axialement le long du stator (15).

14. Machine électrique selon l'une des revendications 11 à 13, pour laquelle ladite machine électrique est du type machine électrique synchro-réluctante.


**Patentansprüche**

1. Rotor (1) für eine elektrische Maschine, wobei der Rotor (1) Folgendes umfasst:

   - einen Rotorkörper, der durch Stapeln von Blechen (3) ausgebildet und vorzugsweise auf einer Rotorwelle (2) positioniert ist,
   - N Paare von Magnetpolen, wobei jeder Magnetpol aus mindestens drei in axialen Aussparungen (6) positionierten Magneten (7) gebildet ist, und
   - drei asymmetrische Flussbarrieren, die jeden Magnetpol bilden, darunter eine äußere Flussbarriere (9), eine mittlere Flussbarriere (10) und eine innere Flussbarriere (11), wobei jede Flussbarriere (9, 10, 11) zwei geneigte Aussparungen (8) umfasst, die zu beiden Seiten jeder axialen Aussparung (6) positioniert sind, wobei die beiden geneigten Aussparungen (8) zwischeneinander einen Öffnungswinkel ($\theta$1, $\theta$2, $\theta$3) bilden, der dem Winkel zwischen zwei Geraden ($\Delta$1, $\Delta$2) entspricht, die jeweils durch die Mitte des Rotors (1) und durch einen Mittelpunkt (M), der im Bereich einer Außenfläche (12) der jeweiligen Aussparungen (8) jeder Flussbarriere (9, 10, 11) positioniert ist, verlaufen;

- Magnete (20) in den geneigten Aussparungen (8) mindestens einer Flussbarriere (9, 10, 11) jedes Magnetpols,
- N primäre Magnetpole (13), die jeweils aus einer inneren Flussbarriere (11) mit einem Öffnungswinkel ($\theta$1), einer mittleren Flussbarriere (10) mit einem Öffnungswinkel ($\theta$2) und einer äußeren Flussbarriere (9) mit einem Öffnungswinkel ($\theta$3) gebildet sind, sodass die Öffnungswinkel ($\theta$1, $\theta$2, $\theta$3) zumindest zwei der folgenden drei Gleichungen erfüllen: $\theta$1 = (0,946 +/- 0,014) x P, $\theta$2 = (0,711 +/- 0,014) x P, $\theta$3 = (0,508 +/- 0,014) x P,
- N sekundäre Magnetpole (14), die jeweils aus einer inneren Flussbarriere (11) mit einem Öffnungswinkel ($\theta$1), einer mittleren Flussbarriere (10) mit einem Öffnungswinkel ($\theta$2) und einer äußeren Flussbarriere (9) mit einem Öffnungswinkel ($\theta$3) gebildet sind, sodass die drei Öffnungswinkel ($\theta$1, $\theta$2, $\theta$3) zumindest zwei der folgenden drei Gleichungen erfüllen: $\theta$1 = (0,776 +/- 0,014) x P, $\theta$2 = (0,564 +/- 0,014) x P, $\theta$3 = (0,348 +/- 0,014) x P, wobei sich jeder sekundäre Pol (14) mit einem primären Pol (13) abwechselt und wobei

- P die Polteilung des Rotors (1) ist, die in Grad durch $P = \frac{360}{2 \times N}$ definiert ist.

2.  Rotor (1) nach Anspruch 1, wobei die Anzahl N von Magnetpolpaaren zwischen 2 und 9, vorzugsweise zwischen 3 und 6 und am bevorzugtesten 5 beträgt.

3.  Rotor (1) nach einem der vorangehenden Ansprüche, wobei die Flussbarrieren im Wesentlichen die Form eines V mit abgeflachtem Boden aufweisen.

4.  Rotor (1) nach einem der vorangehenden Ansprüche, wobei der Rotor in den geneigten Aussparungen (8) der inneren Flussbarriere (11) und der mittleren Flussbarriere (10) Magnete (20) umfasst.

5.  Rotor (1) nach Anspruch 4, wobei die Abmessungen der Magnete (20) in den geneigten Aussparungen (8) der mittleren Flussbarrieren (10) identisch mit den Abmessungen der Magnete (7) in den äußeren axialen Aussparungen (6) sind.

6.  Rotor (1) nach einem der Ansprüche 4 oder 5, wobei die Abmessungen der Magnete (20) in den geneigten Aussparungen (8) der inneren Flussbarrieren (11) identisch mit den Abmessungen der Magnete (7) in den zentralen axialen Aussparungen (6) sind.

7.  Rotor (1) nach einem der vorangehenden Ansprüche, wobei die Öffnungswinkel ($\theta$1, $\theta$2, $\theta$3) der primären Magnetpole (13) zumindest zwei der folgenden drei Gleichungen erfüllen: $\theta$1 = (0,946 +/- 0,008) x P, $\theta$2 = (0,711 +/- 0,008) x P, $\theta$3 = (0,508 +/- 0,008) x P.

8.  Rotor (1) nach einem der vorangehenden Ansprüche, wobei die Öffnungswinkel ($\theta$1, $\theta$2, $\theta$3) der sekundären Magnetpole (14) zumindest zwei der folgenden drei Gleichungen erfüllen: $\theta$1 = (0,776 +/- 0,008) x P, $\theta$2 = (0,564 +/- 0,008) x P, $\theta$3 = (0,348 +/- 0,008) x P.

9.  Rotor (1) nach einem der vorangehenden Ansprüche, wobei die Öffnungswinkel ($\theta$1, $\theta$2, $\theta$3) der primären Magnetpole (13) die drei Gleichungen erfüllen.

10. Rotor (1) nach einem der vorangehenden Ansprüche, wobei die Öffnungswinkel ($\theta$1, $\theta$2, $\theta$3) der sekundären Magnetpole (14) die drei Gleichungen erfüllen.

11. Elektrische Maschine, **dadurch gekennzeichnet, dass** sie einen Stator (15) und einen Rotor (1) nach einem der vorangehenden Ansprüche umfasst, wobei der Rotor (1) innerhalb des Stators (15) angeordnet ist.

12. Elektrische Maschine nach Anspruch 11, **dadurch gekennzeichnet, dass** der Stator (15) eine Vielzahl radialer Kerben (19) umfasst, die in Umfangsrichtung entlang des Stators (15) angeordnet sind, wobei die Anzahl der Kerben (19) vorzugsweise dem Sechsfachen der Anzahl N von Polpaaren des Rotors entspricht.

13. Elektrische Maschine nach Anspruch 12, **dadurch gekennzeichnet, dass** sich die Kerben (19) axial entlang des Stators (15) erstrecken.

**14.** Elektrische Maschine nach einem der Ansprüche 11 bis 13, wobei die elektrische Maschine vom Typ elektrische Synchron-Reluktanzmaschine ist.

**Claims**

**1.** Rotor (1) for an electric machine, the rotor (1) comprising:

- a rotor body, formed by a stack of laminations (3), which is preferably placed on a rotor shaft (2);
- N pairs of magnetic poles, each magnetic pole being composed of at least three magnets (7) which are positioned in axial voids (6); and
- three asymmetric flux barriers which make up each magnetic pole, which include one outer flux barrier (9), one centre flux barrier (10) and one inner flux barrier (11), each flux barrier (9, 10, 11) comprising two inclined voids (8) that are positioned on either side of each axial void (6), the two inclined voids (8) forming an opening angle ($\theta$1, $\theta$2, $\theta$3) between them which corresponds to the angle between two straight lines ($\Delta$1, $\Delta$2) each passing through the centre C of the rotor (1) and through a midpoint (M) positioned on an outer face (12) of the respective voids (8) of each flux barrier (9, 10, 11);
- magnets (20) in the inclined voids (8) of at least one flux barrier (9, 10, 11) of each magnetic pole;
- N primary magnetic poles (13) each composed of an inner flux barrier (11) comprising an opening angle ($\theta$1), a centre flux barrier (10) comprising an opening angle ($\theta$2) and an outer flux barrier (9) comprising an opening angle ($\theta$3), such that the opening angles ($\theta$1, $\theta$2, $\theta$3) satisfy at least two of the following three equations: $\theta$1=(0.946 +/- 0.014) $\times$ P, $\theta$2=(0.711 +/- 0.014) $\times$ P, $\theta$3=(0.508 +/- 0.014) $\times$ P;
- N secondary magnetic poles (14) each composed of an inner flux barrier (11) comprising an opening angle ($\theta$1), a centre flux barrier (10) comprising an opening angle ($\theta$2) and an outer flux barrier (9) comprising an opening angle ($\theta$3), such that the opening angles ($\theta$1, $\theta$2, $\theta$3) satisfy at least two of the following three equations: $\theta$1=(0.776 +/- 0.014) $\times$ P, $\theta$2=(0.564 +/- 0.014) $\times$ P, $\theta$3=(0.348 +/- 0.014) $\times$ P, each secondary pole (14) alternating with a primary pole (13) and where

- P is the pole pitch of said rotor (1) defined in degrees by $P = \frac{360}{2 \times N}$ .

**2.** Rotor (1) according to Claim 1, wherein said number N of pairs of magnetic poles is between 2 and 9, preferably between 3 and 6, and preferably equals 5.

**3.** Rotor (1) according to either of the preceding claims, wherein said flux barriers substantially take the shape of a flat-bottomed V.

**4.** Rotor (1) according to one of the preceding claims, wherein said rotor comprises magnets (20) in said inclined voids (8) of said inner (11) and centre (10) flux barriers.

**5.** Rotor (1) according to Claim 4, wherein the dimensions of said magnets (20) in said inclined voids (8) of said centre flux barriers (10) are identical to the dimensions of said magnets (7) in said outer axial voids (6).

**6.** Rotor (1) according to either of Claims 4 and 5, wherein the dimensions of said magnets (20) in said inclined voids (8) of said inner flux barriers (11) are identical to the dimensions of said magnets (7) in said centre axial voids (6).

**7.** Rotor (1) according to one of the preceding claims, wherein said opening angles ($\theta$1, $\theta$2, $\theta$3) of said primary magnetic poles (13) satisfy at least two of the following three equations: $\theta$1=(0.946 +/- 0.008) $\times$ P, $\theta$2=(0.711 +/-0.008) $\times$ P, $\theta$3=(0.508 +/- 0.008) $\times$ P.

**8.** Rotor (1) according to one of the preceding claims, wherein said opening angles ($\theta$1, $\theta$2, $\theta$3) of said secondary magnetic poles (14) satisfy at least two of the following three equations: $\theta$1=(0.776 +/- 0.008) $\times$ P, $\theta$2=(0.564 +/- 0.008) $\times$ P, $\theta$3=(0.348 +/- 0.008) $\times$ P.

**9.** Rotor (1) according to one of the preceding claims, wherein said opening angles ($\theta$1, $\theta$2, $\theta$3) of said primary magnetic poles (13) satisfy said three equations.

**10.** Rotor (1) according to one of the preceding claims, wherein said opening angles ($\theta$1, $\theta$2, $\theta$3) of said secondary magnetic poles (14) satisfy said three equations.

11. Electric machine, **characterized in that** it comprises a stator (15) and a rotor (1) according to one of the preceding claims, said rotor (1) being housed inside said stator (15).

12. Electric machine according to Claim 11, **characterized in that** said stator (15) comprises a plurality of radial slots (19) that are arranged circumferentially along said stator (15), the number of slots (19) preferably being six times the number N of pole pairs of said rotor.

13. Electric machine according to Claim 12, **characterized in that** said slots (19) extend axially along the stator (15).

14. Electric machine according to one of Claims 11 to 13, for which said electric machine is a synchronous reluctance electric machine.

[Fig 1]

[Fig 2]

[Fig 3]

[Fig 4]

[Fig 5]

[Fig 6]

**EP 3 949 082 B1**

## RÉFÉRENCES CITÉES DANS LA DESCRIPTION

### Documents brevets cités dans la description

- WO 2016188764 A
- FR 1758621
- FR 2995469 A1
- DE 102015105138 A1
- EP 2887503 A1
- US 593080 A1